# EUROPEAN PATENT SPECIFICATION

(11) **EP 2 738 207 B1**
(45) Date of publication and mention of the grant of the patent: **04.11.2015**
(21) Application number: 13194754.1
(22) Date of filing: 28.11.2013
(51) Int. Cl.: C08L 7/00, B60C 1/00, C08L 9/00

(54) **Preparation of rubber compositions containing syndiotactic polybutadiene filament and rubber composition and tire**
Herstellung von Kautschukzusammensetzungen enthaltend syndiotaktisches Polybutadien und Kautschukzusammensetzung und Reifen
Préparation de compositions de caoutchouc contenant un filament de polybutadiène syndiotactique et composition de caoutchouc et pneu

(30) Priority: 29.11.2012 US 201213688264
(43) Date of publication of application: 04.06.2014
(73) Proprietor: The Goodyear Tire & Rubber Company, Akron, Ohio 44316 (US)
(72) Inventor: Sandstrom, Paul Harry, Cuyahoga Falls, OH Ohio 44223 (US)
(74) Representative: Kutsch, Bernd

(56) References cited:
- EP-A1- 0 170 456
- EP-A1- 1 241 219
- EP-A1- 1 693 411
- JP-A- 2007 002 057
- JP-A- 2007 031 568
- US-A- 3 778 424
- US-A- 4 215 021
- US-A- 4 255 296
- US-A- 4 257 468
- US-A- 4 274 462
- US-A- 4 645 809
- US-A1- 2007 155 889

## Description

### Field of the Invention

The invention relates to preparation of rubber compositions containing filamentary fibers of syndiotactic polybutadiene and rubber compositions and tires having components containing filamentary fibers of syndiotactic polybutadiene.

### Background of the Invention

Syndiotactic polybutadiene is a syndiotactic 1,2-polybutadiene polymer with a high syndiotactic 1,2- content prepared by polymerization of 1,3-butadiene monomer. Three possible polybutadiene structures might be formed in the polymerization of 1,3-butadiene monomer, depending on polymerization conditions. One structure is an isotactic configuration where the monomer units add to the polymer chain in the same configuration. Another structure is an atactic configuration where the disposition of monomer units in the polymer chain is random in nature. An additional structure is syndiotactic where the disposition of monomer for the polymer chain are in an alternating configuration.

Syndiotactic polybutadiene (syndiotactic 1,2-polybutadiene) is distinguished from other polybutadienes in one sense that there is participation of only one double bond in the formative polymerization. The syndiotactic 1,2-content is generally at least 80 percent and often at least 90 percent, sometimes ranging, for example, from about 82 to about 92 percent (by weight based on three types of microstructures).

Syndiotactic polybutadiene, in its uncured state, tends to be rigid, crystalline, have poor solubility characteristics and a high softening (melting) point temperature. At temperatures above its melting (softening) point it may be fluid in nature.

Conventionally tires contain various tire components that are reinforced with carbon black and precipitated silica rubber reinforcing fillers to meet various rubber properties and tire performance demands. For this invention, filamentary syndiotactic polybutadiene polymer is proposed for the elastomer reinforcement. In one aspect, it is proposed to replace a portion of rubber reinforcing carbon black and/or precipitated silica reinforcing fillers with filamentary fibers of syndiotactic polybutadiene that are dispersed in an elastomer matrix (e.g. natural or synthetic natural rubber) as a composite thereof. The unique feature of this invention is not just the use of these materials as replacements for rubber reinforcing carbon black and/or precipitated silica reinforcement in rubber compositions, but more importantly the process by which they are produced prior to addition to a conventional mixing chamber, such as a Banbury® internal rubber mixer. The melting points selected for these syndiotactic polybutadiene fibers is well above the temperatures normally used in a conventional Banbury® rubber mixer, which for this invention is limited to a maximum mixing temperature of 170°C to mix elastomers with fillers and other compounding ingredients. For this invention, such syndiotactic polybutadiene is therefore mixed with polyisoprene rubber at high mixing temperatures above the softening point of the syndiotactic polybutadiene in order to present the syndiotactic polybutadiene as a fluid for better mixing with diene-based elastomers such as, for example at least 180°C, alternately above 200°C or even above 220°C in a separate mixing step to form a composite thereof, before addition of the composite to a Banbury® internal rubber mixer for conventional mixing at a lower temperature (with the maximum mixing temperature of 170°C) with other elastomers, fillers and other compounding ingredients to create the final desired rubber component. The process used to produce these composites is uniquely chosen to create small filamentary fibers of the syndiotactic polybutadiene which will provide a reinforcement that can promote replacing a portion of rubber reinforcing carbon black and/or precipitated silica to achieve the desired cured rubber properties.

In the conception of the present invention, it was proposed that if the level of rubber reinforcing carbon black and/or silica, preferably precipitated silica, reinforcing filler in a rubber composition could be reduced, and the omitted filler replaced with a filler material that reduced the hysteresis of the rubber composition, particularly for use as a tire tread, while maintaining a stiffness property for the rubber composition, that rolling resistance and durability of a tire having a component (e.g. tire tread) of such rubber composition could be beneficially improved, and weight reduced by using a lower gravity filler.

Historically syndiotactic polybutadiene has been suggested for an inclusion in rubber compositions for tire components, including tire treads, including adding syndiotactic polybutadiene as a masterbatch to a rubber composition. For example, see US-A-5,307,850 and US-B-6,956,093.

However, for this invention a significant departure from such historical approach is proposed.

For this invention it is envisioned that a rubber composition for a tire component be provided which contains a filamentary fiber form of syndiotactic polybutadiene, namely a rubber composition which contains syndiotactic polybutadiene filaments, particularly where the filamentary syndiotactic polybutadiene is contained as a dispersed component of an alloy thereof.

To accomplish this phenomenon it is envisioned that a filamentary form of the syndiotactic polybutadiene polymer be produced within a rubber composition as a composite thereof and that the produced syndiotactic filaments maintain their filamentary configuration, or form, while being mixed with a rubber composition under conventional high shear mixing and maximum rubber mixing temperature of 170°C and, also, upon curing and shaping the rubber composition as a tire component in a tire mold at a maximum temperature of 170°C.

It is to be appreciated that syndiotactic polybutadiene typically has at least 80 percent and usually at least 90 percent of its monomeric units in a syndiotactic 1,2-conguration. For this invention, it is to have a melting point of at least 200°C or even at least 230°C. It is also to be appreciated that sul fur curable rubber compositions composed of diene-based elastomers for this invention are to be mixed at preparative, non-productive (without sulfur curative), temperatures in a range of from 140°C to a maximum temperature of 170°C. Thereby it is appreciated that that the higher softening point syndiotactic polybutadiene crystalline polymers (below their softening points) do not mix easily with rubber compositions at the aforesaid more normal rubber mixing temperature range (maximum mixing temperature of 170°C). For this invention, then an alloy of syndiotactic polybutadiene polymer with polyisoprene rubber is provided where the syndiotactic polybutadiene polymer is mixed at a significantly higher temperature above its softening point and above such more normal rubber mixing temperature range to form a alloy comprised of a blend of micro sized filamentary syndiotactic polybutadiene polymer and the alloy is then mixed with a rubber composition at a lower conventional rubber mixing temperature.

In order to provide a rubber composition which contains syndiotactic polybutadiene polymer in filamentary form, it is necessary that the syndiotactic polybutadiene has a melting point well above the aforesaid conventional rubber maximum mixing temperatures of 170°C for this invention so that the filamentary form of the syndiotactic polybutadiene polymer is maintained during the rubber mixing process as well as the rubber curing process.

It is readily apparent, then, that a formative technique be used for forming and maintaining the syndiotactic polybutadiene in a filamentary form within a rubber composition for which it promotes a rubber reinforcement quality.

On this basis then, a two step process of syndiotactic polybutadiene fiber (filamentary) formation is provided.

Such two step preparation process is dependent upon a first masterbatch (or alloy) preparation at an elevated temperature using controlled high shear mixing conditions to promote the formation of syndiotactic polybutadiene micro sized domains and elongated filaments formed from the micro sized domains dispersed within a polyisoprene rubber matrix followed by allowing the masterbatch (alloy) to cool to a temperature below the softening point of the syndiotactic polybutadiene filaments and then blending the masterbatch (alloy) with a rubber composition at a significantly lower temperature than the masterbatch preparation temperature.

The micro sized domains of the syndiotactic polybutadiene in said alloy are of an average size in a range of from 0.1 to 20 microns, preferably 0.5 to 6 microns. It is contemplated that such syndiotactic polybutadiene filaments have an average aspect ratio (length to diameter) of, for example, up to 10/1, preferably in a range of from 2/1 to 8/1.

In the description of this invention, the term "phr" where used relates to parts by weight of an ingredient per 100 parts by weight of rubber, unless otherwise indicated.

The terms "rubber" and "elastomer" may be used interchangeably unless otherwise indicated. The terms "vulcanized" and "cured" may be used interchangeably unless otherwise indicated. The terms "compound" and "rubber composition" may be used interchangeably unless indicated.

The softening point of a polymer (e.g. uncured syndiotactic polybutadiene) can be determined by conventional means such as by a differential scanning calorimeter (DSC) at a heating rate of 10°C per minute.

US-A- 4,215,021, US-A- 4,257,468, US-A- 4,255,296 and US-A- 4,274,462, each describe a rubber composition comprising short fibers of syndiotactic polybutadiene in cis 1,4-polyisoprene rubber and optionally further rubbers.

Additional prior about the use of syndiotactic 1,2 polybutadiene fibers and/or rubber compositions comprising cis 1,4-polyisoprene rubber or natural rubber optional together with further elastomers is provided in EP-A- 1 693 411, JP-A- 2009-002057, JP-A- 2007-031568, US-A- 2007/155889, EP-A- 0 170 456, EP-A- 1 241 219, US-A-4,645,809 and US-A- 3,778,424.

### Summary and Practice of the Invention

The invention relates to a process in accordance with claim 1, to a rubber composition in accordance with claim 9 and to a tire in accordance with claim 13.

Dependent claims refer to preferred embodiments of the invention.

In accordance with a preferred aspect of this invention a process of preparing a rubber composition using a two step process is comprised of blending, based on parts by weight per 100 parts by weight rubber (phr), where the terms "rubber" and "elastomer" (for the description of this invention) exclude syndiotactic polybutadiene polymer:
(A) a first step which comprises forming an alloy comprising filamentary syndiotactic polybutadiene dispersed in a cis 1,4-polyisoprene rubber (e.g. at least one of natural and synthetic cis 1,4-polyisoprene rubber) comprising:
   (1) forming a blend of syndiotactic polybutadiene and polyisoprene rubber comprising blending in an internal mixer:
      (a) 2 to 50, alternately from 5 to 30 parts by weight syndiotactic polybutadiene polymer having a softening point in a range of from 180°C to 230ºC, alternately from 200°C to 230°C, alternat ely from 220ºC to 230°C, and having at least 70, alternately at least 80 and alternately at least 90, percent of its monomeric units in a syndiotactic 1,2-configuration, with
      (b) 98 to 50, alternately from 95 to 70, parts by weight of cis 1,4-polyisoprene rubber (e.g. at least one of natural and synthetic, preferably natural, cis 1,4-polyisoprene rubber);
      wherein said syndiotactic polybutadiene polymer and cis 1,4-polyisoprene are blended in said internal rubber mixer rubber at a temperature of at least 10°C above said syndiotactic polybutadiene polymer softening point (e.g. in a range of from 190°C to 240°C, alternately from 200°C to 240°C and alternately from 230ºC to 240°C);
   (2) continuing said mixing at sufficient shear mixing conditions and mixing temperature to form a dispersion of micro sized domains of said syndiotactic polybutadiene in said cis 1,4-polyisoprene rubber and to elongate at least a portion of said domains and then cooling the composite (e.g. allowing the composite to cool while mixing or after removal from the shear mixing step) to form filamentary syndiotactic polybutadiene, followed by
(B) a second step which comprises forming a rubber composition comprising blending up to a maximum temperature of 170°C:
   (1) 100 phr of sulfur curable diene-based elastomers comprising said cis 1,4-polyisoprene rubber of said first step and at least one additional diene-based elastomer;
   (2) sufficient quantity of said alloy to provide from 2 to 50, alternately from 5 to 30 phr of said syndiotactic polybutadiene polymer with (e.g. with 100 parts by weight of) said diene-based elastomer(s),
   (3) 0 to 150, alternately from 5 to 120 phr of reinforcing filler comprising:
      (a) silica or precipitated silica, or
      (b) rubber reinforcing carbon black, or
      (c) a combination of silica or precipitated silica and rubber reinforcing carbon black, and
(C) wherein said process preferably further comprises blending said rubber composition with sulfur curatives (e.g. sulfur and at least one sulfur cure accelerator) in an internal rubber mixer (e.g. at a temperature in a range of from 110°C to 120°C).

In practice, where said reinforcing filler comprises a combination of rubber reinforcing carbon black and precipitated silica, a silica coupler is conventionally added which contains a moiety reactive with hydroxyl groups contained on said precipitated silica and another different moiety interactive with said diene-based elastomer(s).

In further accordance with this invention a rubber composition is provided prepared by said method.

In additional accordance with a preferred aspect of this invention, a rubber composition is provided which is comprised of a blend of, based on parts by weight per 100 parts by weight rubber (phr), where the term "rubber" (for the description of this invention) excludes syndiotactic polybutadiene polymer:
(A) polymer alloy comprising 2 to 50, alternately from 5 to 30, parts by weight of a dispersion of micro sized syndiotactic polybutadiene domains comprising primarily of filaments thereof in 98 to 50, alternately from 95 to 70, parts by weight cis 1,4-polyisoprene rubber (comprising at least one of natural and synthetic polyisoprene rubber, desirably natural cis 1,4-polyisoprene rubber) and
(B) 100 phr of sulfur curable diene-based elastomers comprising said cis 1,4-polyisoprene rubber of said first step and at least one additional diene-based elastomer;
(C) sufficient quantity of said alloy to provide from 2 to 50, alternately from 5 to 30 phr of said filamentary syndiotactic polybutadiene, and
(D) 0 to 150, alternately from 5 to 120 phr of reinforcing filler comprising:
   (1) rubber reinforcing carbon black, or
   (2) a combination of silica or precipitated silica and rubber reinforcing carbon black.

In practice, where said reinforcing filler comprises a combination of rubber reinforcing carbon black and precipitated silica, a silica coupler is conventionally added which contains a moiety reactive with hydroxyl groups contained on said precipitated silica and another different moiety interactive with said diene-based elastomer(s).

In additional accordance with this invention a tire is provided having at least one component comprising said rubber composition.

It can be seen that, as a first step in the process a polymer alloy is formed comprising small syndiotactic polybutadiene domains (e.g. micro domains) which are formed in a mixing process in an internal polymer mixer together with a cis 1,4-polyisoprene rubber at an elevated temperature (at least 200°C or even up to 240°C) and above the softening point of the syndiotactic polybutadiene having a softening point in a range of from 180°C to 230°C, alternately in a range of from 220°C to 230°C. The sheer force generated by the mixing process and mixing temperature is adjusted, or configured, to cause the aforesaid small domains (micro domains) of the syndiotactic polybutadiene dispersion in the polymer alloy to elongate to a filamentary form.

It can be seen that the second step of the process is comprised of blending of the polymer alloy with a rubber composition comprising at least one sulfur curable, diene-based elastomer, and other compounding ingredients, in a conventional rubber mixer, such as for example an internal rubber mixer (e.g. Banbury® rubber mixer), rubber extruder, or open mill rubber mixer. Such second step of blending or mixing, for the practice of this invention, can be accomplished using compounding techniques well known in the art at a mixing temperature of, for example, up to a maximum of 170°C (e.g. in a range of from 150°C to a maximum of 170°C.)

The aforesaid first step of the process comprises producing the alloy at an elevated temperature in which a micro dispersion of the filamentary syndiotactic polybutadiene polymer in the polyisoprene rubber matrix is obtained. It is to be appreciated that such high temperature mixing cannot be achieved during normal rubber mixing temperatures (the aforesaid maximum mixing temperature limitation for this invention of 170°C) and, also that such a micro-sized dispersion of syndiotactic polybutadiene is required to be provided as said alloy at the aforesaid mixing for said alloy significantly above said normal maximum temperature for a rubber composition, therefore requiring the two-step process to achieve the rubber composition containing said alloy.

The elastomers blended in the second step of the process with the polymer alloy of said first step, which contains cis 1,4-polyisoprene rubber, are sulfur curable diene-based elastomers, thereby containing carbon-carbon unsaturation, which can be sulfur cured such as for example at least one polymer of at least one of isoprene and 1,3-butadiene and styrene and at least one of isoprene and 1,3-butadiene. Examples of such rubbers are, for example, at least one of cis-1,4-polyisoprene (natural or synthetic), cis-1,4-polybutadiene, 3,4-polyisoprene, styrene/butadiene copolymers, styrene/isoprene/butadiene terpolymers, as well as butadiene/acrylonitrile copolymers and isoprene/acrylonitrile copolymers, and mixtures thereof. Generally, it is desired that the diene-based elastomer comprises of cis 1,4-polyisoprene or at least contains cis 1,4-polyisoprene rubber. Further, in general, a mixture of two or more elastomers comprising, for example, at least one of natural rubber and synthetic rubbers, such as cis-1,4-polyisoprene, cis-1,4-polybutadiene, 3,4-polyisoprene, styrene/butadiene copolymers and styrene/isoprene/butadiene terpolymers may be desired.

Those skilled in the art will recognize that small amounts of additional curatives (other than sulfur), such as peroxides, can be used in the composition, if desired.

Various additives can be used and mixed with the rubber composition, such as rubber processing oils, sulfur cure accelerators and retarders, antidegradants, zinc oxide, zinc stearate fatty acids, and other pigments, as desired.

Subsequent addition of sulfur curatives (e.g. sulfur and sulfur cure accelerators) at a lower mixing temperature range are blended with the rubber composition, for example, 110°C to 120°C (wherein the sulfur and sulfur cure accelerators are withheld from the initial rubber mixing, as is a conventional practice).

Other such variations in the mixing of the rubber composition will be apparent to those having skill in such art.

The rubber composition of this invention containing the filamentary syndiotactic polybutadiene polymer can be used in any component of the tire, where desired, for example, to promote stiffness of a rubber composition while promoting substantial maintenance or reduction of hysteresis of the rubber composition.

## Claims

1. A process of preparing a rubber composition, the process comprising preparing a blend using, based on parts by weight per 100 parts by weight rubber (phr), where the term rubber excludes syndiotactic polybutadiene polymer:
(A) a first step which comprises forming an alloy comprising filamentary syndiotactic polybutadiene dispersed in a cis 1,4-polyisoprene rubber, the first step comprising:
(1) forming a blend of syndiotactic polybutadiene and cis 1,4-polyisoprene rubber comprising blending in an internal mixer:
(a) 2 to 50 parts by weight syndiotactic polybutadiene polymer having a softening point in a range of from 180°C to 230°C and having at least 70 percent of its monomeric units in a syndiotactic 1,2-configuration, with
(b) 98 to 50 parts by weight of cis 1,4-polyisoprene rubber;
wherein the syndiotactic polybutadiene polymer and the cis 1,4-polyisoprene are blended in the internal rubber mixer rubber at a temperature of at least 10°C above the syndiotactic polybutadiene polymer softening point;
(2) continuing the mixing at sufficient shear mixing conditions and mixing temperature to form a dispersion of micro sized domains of the syndiotactic polybutadiene in the cis 1,4-polyisoprene rubber and to elongate at least a portion of these domains and then cooling the composite to from the alloy of filamentary syndiotactic polybutadiene dispersed in the cis 1,4-polyisoprene rubber, followed by
(B) a second step which comprises forming a rubber composition comprising blending up to a maximum temperature of 170°C:
(1) 100 phr of sulfur curable diene-based elastomers comprising cis 1,4-polyisoprene rubber, preferably the cis 1,4-polyisoprene rubber, and at least one additional diene-based elastomer;
(2) a sufficient quantity of the alloy to provide from 2 to 50 phr of the syndiotactic polybutadiene polymer with the diene-based elastomer(s),
(3) 0 to 150 phr of a reinforcing filler comprising:
(a) silica, or
(b) carbon black, or
(c) a combination of silica and carbon black.

2. The process of claim 1 wherein the process further comprises:
(C) blending the rubber composition with sulfur curatives in an internal rubber mixer at a temperature in a range of from 110°C to 120°C.

3. The process of claim 1 or 2 wherein the reinforcing filler comprises rubber reinforcing carbon black or wherein the reinforcing filler comprises a combination of rubber reinforcing carbon black and precipitated silica.

4. The process of at least one of the previous claims wherein a silica coupler is added which is contains a moiety reactive with hydroxyl groups contained on the silica, preferably the precipitated silica, and another different moiety interactive with the diene-based elastomer(s).

5. The process of at least one of the previous claims wherein the additional diene-based elastomer comprises at least one of polymer(s) of at least one of isoprene and 1,3-butadiene and at least one of copolymers of styrene with at least one of isoprene and 1,3-butadiene.

6. The process of claim 1 wherein the syndiotactic polybutadiene has a softening point in a range of from 200°C to 230°C a nd/or has at least 80 percent, alternatively at least 90 percent, of its monomeric units in a syndiotactic 1,2-configuration.

7. The process of claim 1 or 6 wherein the syndiotactic polybutadiene has a softening point in a range of from 220°C to 230°C a nd has at least 90 percent of its monomeric units in a syndiotactic 1,2-configuration.

8. A rubber composition comprising a blend, based on parts by weight per 100 parts by weight rubber (phr), where the term rubber excludes syndiotactic polybutadiene polymer:
(A) a polymer alloy comprising 2 to 50 parts by weight of a dispersion of micro sized syndiotactic polybutadiene domains comprising filaments thereof, preferably primarily of filaments thereof, in 98 to 50 parts by weight cis 1,4-polyisoprene rubber, said syndiotactic polybutadiene having a melting point of at least 200°C and said micro sized syndiotactic polybutadiene domains in said alloy having an average size in a range of from 0.1 to 20 microns; and
(B) 100 phr of sulfur curable diene-based elastomers comprising cis 1,4-polyisoprene rubber, preferably the cis 1,4-polyisoprene rubber, and at least one additional diene-based elastomer;
wherein the rubber composition comprises the alloy in a sufficient quantity to provide from 2 to 50 phr of the filamentary syndiotactic polybutadiene, and
(C) 0 to 150 phr of a reinforcing filler comprising:
(1) carbon black, or
(2) a combination of silica or precipitated silica and carbon black.

9. The rubber composition 8 wherein the reinforcing filler comprises a combination of rubber reinforcing carbon black and precipitated silica.

10. The rubber composition of claim 8 or 9 containing a silica coupler comprising a moiety reactive with hydroxyl groups contained on the silica, preferably the precipitated silica, and another different moiety interactive with said diene-based elastomer(s).

11. The rubber composition of claim 8, 9 or 10 wherein the additional diene-based elastomer comprises at least one of polymer(s) of at least one of isoprene and 1,3-butadiene and at least one of copolymers of styrene with at least one of isoprene and 1,3-butadiene.

12. The rubber composition of claim 8 wherein the syndiotactic polybutadiene has a softening point in a range of from 220°C to 230°C and has at least 90 percent of its monomeric units in a syndiotactic 1,2-configuration.

13. A tire having at least one component comprising the rubber composition of at least one of the claims 8 to 12.

14. The tire of claim 13 wherein the tire is a pneumatic tire and the component is a tread or a tread cap.

## Patentansprüche

1. Verfahren zur Herstellung einer Kautschukzusammensetzung, wobei das Verfahren das Herstellen eines Gemischs umfasst, auf Basis von Gewichtsteilen je 100 Gewichtsteile Kautschuk (ThK), wobei der Begriff Kautschuk bzw. Gummi syndiotaktisches Polybutadienpolymer ausschließt, unter Anwendung:
(A) eines ersten Schritts, der die Bildung einer Legierung umfasst, welche fadenförmiges syndiotaktisches Polybutadien, dispergiert in einem cis-1,4-Polyisoprenkautschuk, umfasst, wobei der erste Schritt umfasst:
(1) Bilden eines Gemisches von syndiotaktischem Polybutadien und cis-1,4-Polyisoprenkautschuk, umfassend das in einem Innenmischer Mischen von:
(a) 2 bis 50 Gewichtsteilen syndiotaktisches Polybutadienpolymer, das einen Erweichungspunkt im Bereich von 180°C bis 230°C aufweist und bei dem mindestens 70 Prozent seiner Monomereinheiten in einer syndiotaktischen 1,2-Konfiguration vorliegen, mit
(b) 98 bis 50 Gewichtsteilen cis-1,4-Polyisoprenkautschuk;
wobei das syndiotaktische Polybutadienpolymer und das cis-1,4-Polyisopren in dem Innengummimischer auf einer Temperatur von mindestens 10°C über dem Erweichungspunkt des syndiotaktischen Polybutadienpolymers gemischt werden;
(2) Fortsetzen des Mischens unter ausreichenden Schermischbedingungen und auf ausreichender Mischtemperatur, um eine Dispersion von Domänen von Mikrogröße des syndiotaktischen Polybutadiens in dem cis-1,4-Polyisoprenkautschuk zu bilden und mindestens einen Teil dieser Domänen zu recken, und dann Abkühlen des Verbundwerkstoffs, um die Legierung aus in dem cis-1,4-Polyisoprenkautschuk dispergierten fadenförmigen syndiotaktischen Polybutadiens zu bilden, gefolgt durch
(B) einen zweiten Schritt, der das Bilden einer Kautschukzusammensetzung umfasst, umfassend das Mischen, bis zu einer Höchsttemperatur von 170°C, von:
(1) 100 ThK schwefelvulkanisierbarer dienbasierter Elastomere, umfassend cis-1,4-Polyisoprenkautschuk, bevorzugt den cis-1,4-Polyisoprenkautschuk, und mindestens ein zusätzliches dienbasiertes Elastomer;
(2) eine ausreichende Menge der Legierung, um 2 bis 50 ThK des syndiotaktischen Polybutadienpolymers mit dem bzw. den dienbasierten Elastomer(en) bereitzustellen,
(3) 0 bis 150 ThK eines Verstärkungsfüllstoffs, umfassend:
(a) Silika, oder
(b) Carbon Black, oder
(c) eine Kombination von Silika und Carbon Black.

2. Verfahren nach Anspruch 1, wobei das Verfahren weiter umfasst:
(C) Mischen der Kautschukzusammensetzung mit Schwefelvulkanisationsmitteln in einem Innengummimischer auf einer Temperatur im Bereich von 110°C bis 120°C.

3. Verfahren nach Anspruch 1 oder 2, wobei der Verstärkungsfüllstoff Kautschukverstärkungs-Carbon Black umfasst oder wobei der Verstärkungsfüllstoff eine Kombination von Kautschukverstärkungs-Carbon Black und ausgefälltem Silika umfasst.

4. Verfahren nach mindestens einem der vorhergehenden Ansprüche, wobei ein Silika-Haftvermittler zugesetzt wird, der einen Anteil, der mit auf dem Silika, bevorzugt dem ausgefällten Silika, enthaltenen Hydroxylgruppen reaktiv ist, und einen anderen, verschiedenen Anteil, der mit dem bzw. den dienbasierten Elastomer(en) in Wechselwirkung tritt, enthält.

5. Verfahren nach mindestens einem der vorhergehenden Ansprüche, wobei das zusätzliche dienbasierte Elastomer mindestens eines von Polymer(en) von mindestens einem von Isopren und 1,3-Butadien und mindestens eines von Copolymeren von Styrol mit mindestens einem von Isopren und 1,3-Butadien umfasst.

6. Verfahren nach Anspruch 1, wobei das syndiotaktische Polybutadien einen Erweichungspunt im Bereich von 200°C bis 230°C aufweist und/oder bei dem mindestens 80 Prozent, alternativ mindestens 90 Prozent, seiner Monomereinheiten in einer syndiotaktischen 1,2-Konfiguration vorliegen.

7. Verfahren nach Anspruch 1 oder 6, wobei das syndiotaktische Polybutadien einen Erweichungspunkt im Bereich von 220°C bis 230°C aufweist und bei dem mindestens 90 Prozent seiner Monomereinheiten in einer syndiotaktischen 1,2-Konfiguration vorliegen.

8. Kautschukzusammensetzung, umfassend ein Gemisch auf Basis von Gewichtsteilen je 100 Gewichtsteile Kautschuk (ThK), wobei der Begriff Kautschuk syndiotaktisches Polybutadienpolymer ausschließt:
(A) eine Polymerlegierung, umfassend 2 bis 50 Gewichtsteile einer Dispersion von syndiotaktischen Polybutadiendomänen von Mikrogröße, umfassend Filamente davon, bevorzugt vor allem Filamente davon, in 98 bis 50 Gewichtsteilen cis-1,4-Polyisoprenkautschuk, wobei das syndiotaktische Polybutadien einen Schmelzpunkt von mindestens 200°C aufweist und die syndiotaktischen Polybutadiendomänen von Mikrogröße in der Legierung eine durchschnittliche Größe im Bereich von 0,1 bis 20 Mikron aufweisen; und
(B) 100 ThK schwefelvulkanisierbare dienbasierte Elastomere, umfassend cis-1,4-Polyisoprenkautschuk, bevorzugt den cis-1,4-Polyisoprenkautschuk, und mindestens ein zusätzliches dienbasiertes Elastomer;
wobei die Kautschukzusammensetzung die Legierung in einer ausreichenden Menge umfasst, um 2 bis 50 ThK des fadenförmigen syndiotaktischen Polybutadiens bereitzustellen, und
(C) 0 bis 150 ThK eines Verstärkungsfüllstoffs, umfassend:
(1) Carbon Black, oder
(2) eine Kombination von Silika oder ausgefälltem Silika und Carbon Black.

9. Kautschukzusammensetzung nach Anspruch 8, wobei der Verstärkungsfüllstoff eine Kombination von Kautschukverstärkungs-Carbon Black und ausgefälltem Silika umfasst.

10. Kautschukzusammensetzung nach Anspruch 8 oder 9, welche einen Silikahaftvermittler enthält, der einen Anteil, der mit auf dem Silika, bevorzugt dem ausgefällten Silika, enthaltenen Hydroxylgruppen reaktiv ist, und einen anderen, verschiedenen Anteil, der mit dem bzw. den dienbasierten Elastomer(en) in Wechselwirkung tritt, enthält.

11. Kautschukzusammensetzung nach Anspruch 8, 9 oder 10, wobei das zusätzliche dienbasierte Elastomer mindestens eines von Polymer(en) von mindestens einem von Isopren und 1,3-Butadien und mindestens eines von Copolymeren von Styrol mit mindestens einem von Isopren und 1,3-Butadien umfasst.

12. Kautschukzusammensetzung nach Anspruch 8, wobei das syndiotaktische Polybutadien einen Erweichungspunkt im Bereich von 220°C bis 230°C aufweist und bei dem mindestens 90 Prozent seiner Monomereinheiten in einer syndiotaktischen 1,2-Konfiguration vorliegen.

13. Reifen mit mindestens einem Bauteil, das die Kautschukzusammensetzung nach mindestens einem der Ansprüche 8 bis 12 umfasst.

14. Reifen nach Anspruch 13, wobei der Reifen ein Luftreifen ist und das Bauteil eine Reifenlauffläche oder ein Laufstreifenoberteil ist.

## Revendications

1. Procédé pour préparer une composition de caoutchouc, le procédé comprenant le fait de préparer un mélange intime par la mise en oeuvre, en se basant sur des parties en poids par 100 parties en poids de caoutchouc (phr), le terme « caoutchouc » excluant un polymère de polybutadiène syndiotactique :
(A) d'une première étape qui comprend la formation d'un alliage comprenant du polybutadiène syndiotactique filamentaire à l'état dispersé dans un caoutchouc de 1,4-cis-polyisoprène, la première étape comprenant le fait de :
(1) former un mélange intime d'un polybutadiène syndiotactique et d'un caoutchouc de 1,4-cis-polyisoprène comprenant le fait de mélanger intimement dans un mélangeur interne :
(a) de 2 à 50 parties en poids d'un polymère de polybutadiène syndiotactique possédant un point de ramollissement dans la plage de 180 °C à 230 °C et dans lequel au moins 70 % de ses unités monomères se trouvent dans une configuration syndiotactique 1,2, avec
(b) de 98 à 50 parties en poids d'un caoutchouc de 1,4-cis-polyisoprène ;
dans lequel le polymère de polybutadiène syndiotactique et le 1,4-cis-polyisoprène sont mélangés de manière intime dans le mélangeur de caoutchouc interne à une température qui est supérieure à concurrence d'au moins 10 °C au point de ramollissement du polymère de polybutadiène syndiotactique ;
(2) poursuivre le mélange dans des conditions de mélange par cisaillement et à une température de mélange suffisantes pour obtenir une dispersion de domaines de dimension microscopique du polybutadiène syndiotactique dans le caoutchouc de 1,4-cis-polyisoprène et pour allonger au moins une portion de ces domaines, et refroidir ensuite le composite pour obtenir l'alliage de polybutadiène syndiotactique filamentaire à l'état dispersé dans le caoutchouc de 1,4-cis-polyisoprène ; suivie
(B) d'une deuxième étape comprenant la formation d'une composition de caoutchouc, qui comprend le fait de soumettre à un mélange intime, jusqu'à une température maximale de 170 °C :
(1) 100 phr d'élastomères à base diénique vulcanisables au soufre comprenant un caoutchouc de 1,4-cis-polyisoprène, de préférence le caoutchouc de 1,4-cis-polyisoprène, et d'au moins un élastomère supplémentaire à base diénique ;
(2) une quantité suffisante de l'alliage pour obtenir de 2 à 50 phr du polymère de polybutadiène syndiotactique avec le ou les élastomères à base diénique ;
(3) de 0 à 150 phr d'une matière de charge pour le renforcement, comprenant :
(a) de la silice ; ou
(b) du noir de carbone ; ou
(c) une combinaison de silice et de noir de carbone.

2. Procédé selon la revendication 1, dans lequel le procédé comprend en outre le fait de :
(C) soumettre à un mélange intime la composition de caoutchouc avec des adjuvants de vulcanisation au soufre dans un mélangeur de caoutchouc interne à une température dans la plage de 110°C à 120 °C.

3. Procédé selon la revendication 1 ou 2, dans lequel la matière de charge pour le renforcement comprend du noir de carbone pour le renforcement du caoutchouc ou dans lequel la matière de charge pour le renforcement comprenant une combinaison de noir de carbone pour le renforcement du caoutchouc et de silice précipitée.

4. Procédé selon au moins une des revendications précédentes, dans lequel on ajoute un coupleur pour la silice qui contient une fraction apte à réagir avec les groupes hydroxyle contenus sur la silice, de préférence sur la silice précipitée, et une autre fraction différente apte à entrer en interaction avec le ou les élastomères à base diénique.

5. Procédé selon au moins une des revendications précédentes, dans lequel l'élastomère supplémentaire à base diénique comprend au moins un membre choisi parmi le groupe choisi comprenant un polymère choisi parmi un polymère d'isoprène et un polymère de 1,3-butadiène et au moins un copolymère choisi parmi le groupe comprenant un copolymère de styrène avec au moins un polymère choisi parmi un polymère d'isoprène et un polymère de 1,3-butadiène.

6. Procédé selon la revendication 1, dans lequel le polybutadiène syndiotactique possède un point de ramollissement dans la plage de 200 °C à 230 °C et/ou au moins 80 %, en variante au moins 90 %, de ses unités monomères se trouvent dans une configuration syndiotactique 1,2.

7. Procédé selon la revendication 1 ou 6, dans lequel le polybutadiène syndiotactique possède un point de ramollissement dans la plage de 220 °C à 230 °C et au moins 90 % de ses unités monomères se trouvent dans une configuration syndiotactique 1,2.

8. Composition de caoutchouc comprenant un mélange intime, basé sur des parties en poids par 100 parties en poids de caoutchouc (phr), le terme « caoutchouc » excluant un polymère de polybutadiène syndiotactique :
(A) d'un alliage polymère comprenant de 2 à 50 parties en poids d'une dispersion de domaines de dimension microscopique de polybutadiène syndiotactique comprenant des filaments de ce dernier, de préférence des filaments de ce dernier à titre principal, dans 98 à 50 parties en poids de caoutchouc de 1,4-cis-polyisoprène, ledit polybutadiène syndiotactique possédant un point de fusion d'au moins 200 °C, et lesdits domaines de dimension microscopique de polybutadiène syndiotactique dans ledit alliage possédant une dimension moyenne dans la plage de 0,1 à 20 microns ; et
(B) de 100 phr d'élastomères à base diénique vulcanisables au soufre comprenant du caoutchouc de 1,4-cis-polyisoprène, de préférence le caoutchouc de 1,4-cis-polyisoprène, et d'au moins un élastomère supplémentaire à base diénique ;
dans laquelle la composition de caoutchouc comprend l'alliage en une quantité suffisante pour obtenir de 2 à 50 parties en poids du polybutadiène syndiotactique filamentaire ; et
(C) de 0 à 150 phr d'une matière de charge pour le renforcement, comprenant :
(1) du noir de carbone ; ou
(2) une combinaison de silice ou de silice précipitée et de noir de carbone.

9. Composition de caoutchouc selon la revendication 8, dans laquelle la matière de charge pour le renforcement comprend une combinaison de noir de carbone pour le renforcement du caoutchouc et de silice précipitée.

10. Composition de caoutchouc selon la revendication 8 ou 9 contenant un coupleur pour la silice qui contient une fraction apte à réagir avec les groupes hydroxyle contenus sur la silice, de préférence sur la silice précipitée, et une autre fraction différente apte à entrer en interaction avec le ou les élastomères à base diénique.

11. Composition de caoutchouc selon la revendication 8, 9 ou 10, dans laquelle dans lequel l'élastomère supplémentaire à base diénique comprend au moins un membre choisi parmi le groupe choisi comprenant un polymère choisi parmi un polymère d'isoprène et un polymère de 1,3-butadiène et au moins un copolymère choisi parmi le groupe comprenant un copolymère de styrène avec au moins un polymère choisi parmi un polymère d'isoprène et un polymère de 1,3-butadiène.

12. Composition de caoutchouc selon la revendication 8, dans laquelle le polybutadiène syndiotactique possède un point de ramollissement dans la plage de 220 °C à 230 °C et au moins 90 % de ses unités monomères se trouvent dans une configuration syndiotactique 1,2.

13. Bandage pneumatique possédant au moins un composant comprenant la composition de caoutchouc selon au moins une des revendications 8 à 12.

14. Bandage pneumatique selon la revendication 13, dans lequel le bandage pneumatique est un bandage pneumatique et le composant est une bande de roulement ou une chape de bande de roulement.
